# Europäisches Patentamt

## European Patent Office

## Office européen des brevets

(11) Veröffentlichungsnummer : **0 362 553 B1**

(12) **EUROPÄISCHE PATENTSCHRIFT**

(45) Veröffentlichungstag der Patentschrift :
03.06.92 Patentblatt 92/23

(51) Int. Cl.$^5$ : **F23G 5/16, F23L 15/02**

(21) Anmeldenummer : **89116051.7**

(22) Anmeldetag : **31.08.89**

(54) **Verfahren und Einrichtung zur thermischen Behandlung von Abfallstoffen.**

(30) Priorität : **01.10.88 DE 3833457**

(43) Veröffentlichungstag der Anmeldung :
**11.04.90 Patentblatt 90/15**

(45) Bekanntmachung des Hinweises auf die
Patenterteilung :
**03.06.92 Patentblatt 92/23**

(84) Benannte Vertragsstaaten :
**DE ES FR GB NL SE**

(56) Entgegenhaltungen :
**WO-A-87/05988**
**US-A- 1 606 927**
**US-A- 4 604 051**

(73) Patentinhaber : **MAN Gutehoffnungshütte
Aktiengesellschaft
Bahnhofstrasse 66 Postfach 11 02 40
W-4200 Oberhausen 11 (DE)**

(72) Erfinder : **Knop, Klaus, Dr.-Ing.
Eckesdyck 11
W-4170 Geldern (DE)**
Erfinder : **Wolters, Günter, Dipl.-Ing.
Kaiserswerther Strasse 274
W-4000 Düsseldorf 30 (DE)**

EP 0 362 553 B1

Jouve, 18, rue Saint-Denis, 75001 PARIS

## Beschreibung

Die Erfindung betrifft eine Einrichtung zur regenerativen Wärmerückgewinnung aus dem Rauchgasen einer Feuerung mit Hilfe von zwei Regeneratoren für die Verbrennungsluftvorwärmung bzw. Reinigung des Abgases, wobei die Einrichtung die erforderlichen Luft- und Rauchgasfördereinrichtungen mit den Absperr- und Regelarmaturen sowie zwei Brennkammern aufweist, in welchen Brennstoff und vorgewärmte Luft zugeführt und verbrannt werden und deren Rauchgase einem gemeinsamen Brennraum zugeführt werden und welche Brennkammern jeweils zwischen einem Regenerator und dem Brennraum angeordnet sind, und wobei die Regeneratoren einen Teilabschnitt für die Speicherung der Rauchgaswärme bzw. für die Luftvorwärmung und einen zweiten Teilabschnitt mit Filtermassen zur katalytischen Entfernung von $NO_x$ oder anderen Rauchgasinhaltsstoffen aufweisen. Die Erfindung betrifft ferner ein Verfahren zur thermischen Behandlung von Abfallstoffen mit Hilfe der genannten Einrichtung.

Die umweltbewußte Entsorgung spezieller, nicht problemlos deponierfähiger, nicht oder schwer brennbarer Abfallstoffe macht eine thermische Behandlung dieser Stoffe bei hohen Temperaturen erforderlich.

Haben die Abfallstoffe nur einen niedrigen Heizwert oder sind sie überhaupt nicht brennbar, so ist ein Zusatz von Brennstoffen notwendig, der erst eine "Verbrennung" (thermische Aufbereitung) des zu behandelnden Abfallstoffes möglich macht.

Üblicherweise wird der Abfallstoff in z.B. ein Drehrohr gegeben und unter Zugabe von Brennstoff und Luft so weit thermisch aufbereitet (verbrannt), daß eine problemlose Deponie der zurückbleibenden Schlacke möglich wird. Die bei der Verbrennung anfallenden Abgase werden in entsprechenden Rauchgaskesseln abgekühlt, wobei Dampf erzeugt wird. In nachgeschalteten Rauchgaswascheinrichtungen werden mit viel Aufwand Staub und sonstige Verunreinigungen ($SO_2$ usw.) aus dem Rauchgas entfernt.

Diese Art der Abfallbeseitigung ist energieintensiv und aufwendig, insbesondere hinsichtlich der Abgasreinigung. Ferner ist man bei den bekannten Verfahren auf die Produktion von Dampf angewiesen, um die Abwärme aus dem Drehrohr und der Nachbrennkammer wirtschaftlich zu nutzen.

Aus der WO-A-87/05 988 ist eine Einrichtung zur regenerativen Wärmerückgewinnung aus den Rauchgasen einer Feuerung mit Hilfe von zwei Regeneratoren für die Verbrennungsluftvorwärmung bzw. Reinigung des Abgases bekannt.

Aus der metallerzeugenden Industrie sind ferner Verfahren (Siemens-Martin-Ofen) bekannt, bei denen beispielsweise die Abwärme aus Rauchgasen zur Erwärmung von wärmespeichernden Massen (Regeneratoren) dient, und die gespeicherte Wärme später wieder an den Prozeß abgegeben wird.

Aufgabe der Erfindung ist es, ausgehend von einem Stand der Technik, wie er aus der WO-A1-87/05 988 hervorgeht, eine Einrichtung zur thermischen Behandlung von Abfallstoffen und ein Verfahren zur Durchführung der Abfallstoffbeseitigung zu schaffen, bei denen mit möglichst geringem Energie- und Investitionskostenaufwand eine umweltschonende Beseitigung von Abfallstoffen ermöglicht wird.

Die Erfindung löst diese Aufgabe entsprechend den Merkmalen der Patentansprüche.

Bei der erfindungsgemäßen Einrichtung und dem Verfahren zum Betreiben der Einrichtung orientiert man sich an einem aus Wärmerückgewinnungsverfahren grundsätzlich bekanntem Wärmespeicherprozeß, wobei die beim Betreiben von Regeneratoren bekannte periodische Umkehrbarkeit der Luft- und Rauchgasführung ausgenutzt wird. Neuartig ist jedoch an der erfindungsgemäßen Einrichtung und dem Betriebsverfahren, daß dieses Prinzip auf die thermische Behandlung sowohl von nicht brennbaren, schwer brennbaren und brennbaren, jedoch nicht problemlos deponierfähigen Abfallstoffen in einem Einschmelzgefäß angewendet wird. Den Regeneratoren fällt dabeineben ihrer Rolle als Wärmespeicher und Wärmeüberträger auch die Aufgabe einer Rauchgasreinigungsapparatur zu. Die Aufteilung der Regeneratoren in Teilabschnitte für verschiedene Behandlungsstufen ist dabei von besonderer Bedeutung.

Die Erfindung wird nachstehend anhand der Zeichnungen näher erläutert. Es zeigen:

Fig. 1 ein Fließschema des Verfahrens mit schematischer Anordnung der Einrichtungen und

Fig. 2 ein ähnliches Fließschema, bei dem die Teilabschnitte der Regeneratoren in Einzelaggregate aufgeteilt und weitere Behandlungsstufen für Rauchgas angeschlossen sind.

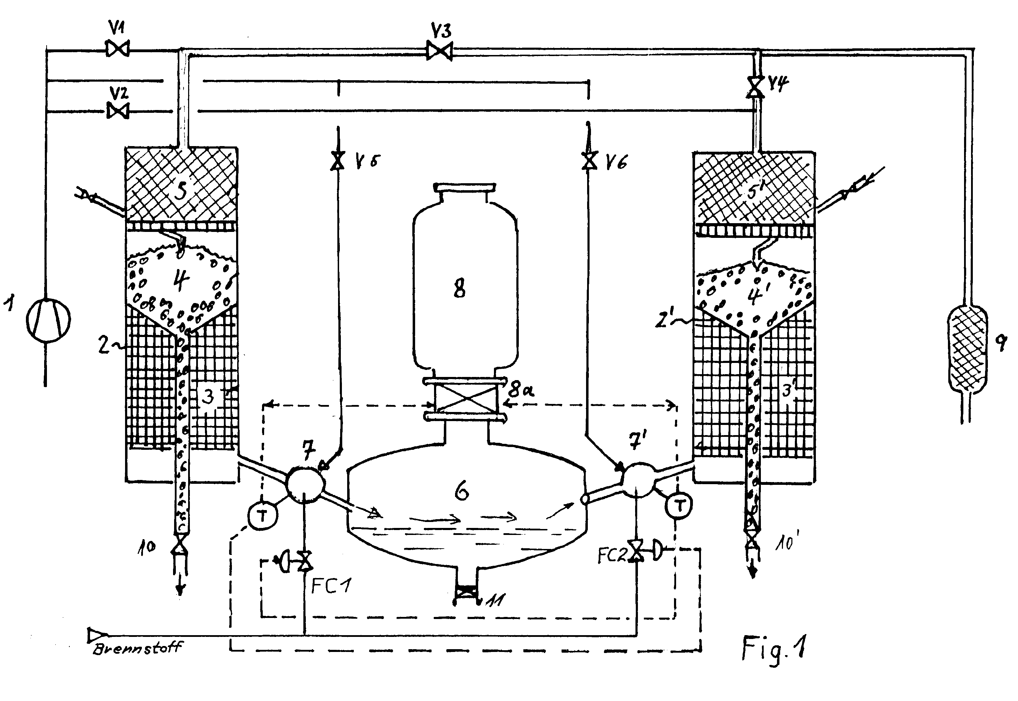

Das Verfahren nach Fig. 1 läuft wie folgt ab:

Luft aus dem Gebläse (1) wird über ein Ventil (V1), während die Ventile (V2) und (V3) geschlossen sind, dem Regenerator (2) zugeführt und strömt mit einer vorgegebenen Austrittstemperatur in die Brennkammer (7).

In der Brennkammer (7) wird Brennstoff über ein Regelventil (FC1) so zugeführt, daß das aus dem Einschmelzgefäß (6) ausströmende Rauchgas ein vorgegebenes Temperaturintervall, gemessen in Brennkammer (7'), nicht über- oder unterschreiten wird. Das aus der Brennkammer (7') in den Regenerator (2') einströmende Rauchgas wärmt die Speichermasse auf, wobei es sich abkühlt.

Die Regeneratoren (2, 2') sind in drei Teilabschnitte aufgeteilt. Der Teilabschnitt (3, 3') besteht aus hochfeuerfestem Speichermaterial, insbesondere Schamotte, der Teil (4, 4′) ist eine aus Calciumverbindungen bestehende Schüttung, die z.B. Schwefel oder organische Halogenide aus dem Rauchgas entnehmen kann und die über (10, 10′) aus dem Regenerator abgezogen werden kann. Der Bereich (4, 4′) kann so ausgelegt werden, daß mitgerissener Staub in diesem Teil abgefangen wird.

Nach Durchtritt des Rauchgases durch den Teilabschnitt (4, 4′) strömt das Abgas in den Teil (5, 5′), in dem eine weitere Speicherung von Wärme möglich ist.

Teilabschnitt (5, 5′) kann als Filter oder auch als Katalysator zur Zersetzung von Schadstoffen im Rauchgas benutzt werden. Dieser Teilabschnitt wird zu diesem Zweck mit einer bekannten Filtermasse versehen.

Die Abkühlung in dem Teilabsachnitt (5, 5′) kann so erfolgen, daß eine Rückbildung von Substanzen im Rauchgas in beispielsweise Dioxine nicht möglich wird.

Das Rauchgas strömt anschließend über einen weiteren Filter (9) ab.

Der vorstehend beschriebene Vorgang läuft nunmehr rückwärts. Ventil (V2) wird geöffnet, Ventil (V4) geschlossen, Ventil (V3) geöffnet. Das Rauchgas strömt über die Brennkammer (7′) zur Brennkammer (7) und über das Ventil (V3) dem Filter (9) zu.

Eine zusätzliche Regelung der Temperaturen in den Brennkammern (7, 7′) ist möglich über eine kontrollierte Abfallmengenzugabe pro Zeiteinheit aus dem Abfallbehälter (Container 8) sowie über Fremdluftzugabe über die Ventile (V5, V6) in die Brennkammern (7, 7′).

Nicht brennbare Abfallstoffe aus dem Container (8) schmelzen in dem Einschmelzgefäß (6) auf und werden über den Abzug (11) als flüssige Schlacke abgezogen.

Die Brennkammern (7, 7′) sind derart gestaltet, daß bei nicht ausgebranntem Abgas, das aus dem Einschmelzgefäß (6) kommt, eine Nachfeuerung vorgenommen werden kann (Funktion als Nachbrennkammer).

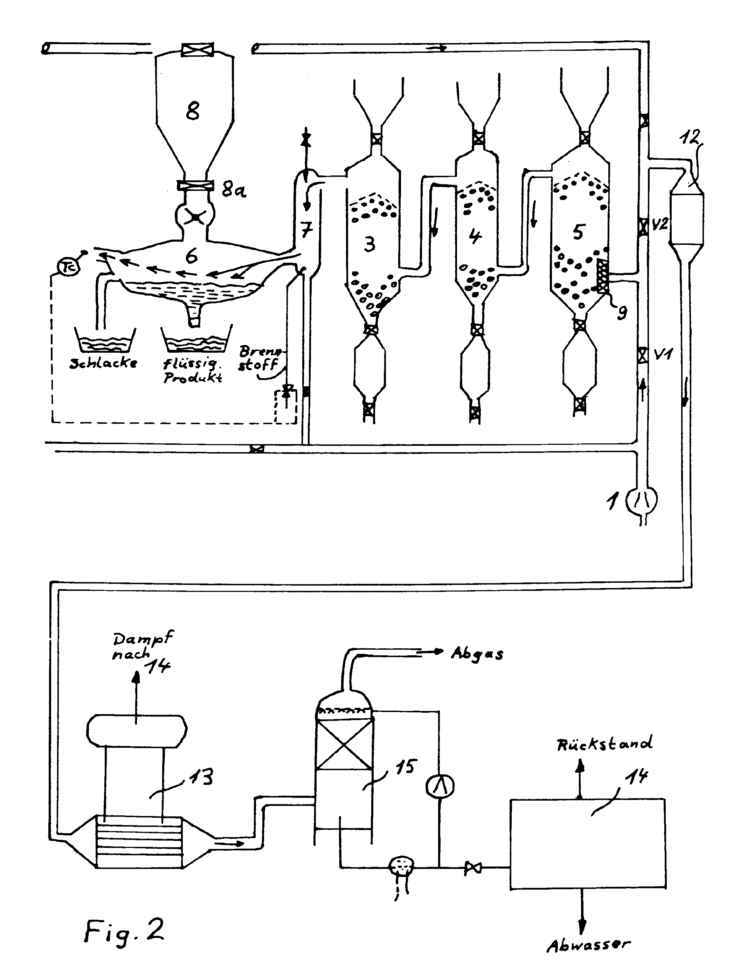

Eine Variante des Verfahrens entsprechend Fig. 1 ist in Fig. 2 dargstellt. Diese Darstellung gibt neben dem Einschmelzgefäß (6) mit Beschickung etc. und der Brennkammer den Weg des Rauchgases über den Regenerator bis zum Quench wieder.

Entsprechend dieser Variante sind die Teilabschnitte (3, 3′, 4, 4′, 5, 5′) der Regeneratoren (2, 2′) in Einzelaggregate aufgeteilt worden.

Außerdem zeigt Fig. 2 ergänzend zu Fig. 1 den Rauchgasbehandlungsteil, bestehend aus $NO_x$-Katalysator (12), Dampferzeuger (13) für eine Eindampfanlage (14), Quench (15) für die Reinigung des Rauchgases von Chlor- und Fluor-Verbindungen sowie von Reststäuben.

## Patentansprüche

1. Einrichtung zur regenerativen Wärmerückgewinnung aus den Rauchgasen einer Feuerung mit Hilfe von zwei Regeneratoren für die Verbrennungsluftvorwärmung bzw. Reinigung des Abgases, wobei die Einrichtung die erforderlichen Luft- und Rauchgasfördereinrichtungen mit den Absperr- und Regelarmaturen sowie zwei Brennkammern aufweist, in welchen Brennstoff und vorgewärmte Luft zugeführt und verbrannt werden und deren Rauchgase einem gemeinsamen Brennraum zugeführt werden und welche Brennkammern jeweils zwischen einem Regenerator und dem Brennraum angeordnet sind, und wobei die Regeneratoren einen Teilabschnitt für die Speicherung der Rauchgaswärme bzw. für die Luftvorwärmung und einen zweiten Teilabschnitt mit Filtermassen zur katalytischen Entfernung von $NO_x$ oder anderen Rauchgasinhaltsstoffen aufweisen, dadurch gekennzeichnet, daß

a) der gemeinsame Brennraum als Einschmelzgefäß (6) mit geregelter Zufuhr für Abfallstoffe und mit Abzug (11) für die darin gebildeten Schlacken ausgebildet ist und

b) die Regeneratoren (2, 2′)
– einen ersten Teilabschnitt (3, 3′), der als Gitterkammer ausgebildet ist,
– einen zweiten Teilabschnitt (4, 4′), der als Adsorber von im Rauchgas enthaltenen Verunreinigungen, mit austauschbaren Adsorptionsmitteln, ausgebildet ist, und
– einen dritten Teilabschnitt (5, 5′) mit Filtermassen zur katalytischen Entfernung von $NO_x$ oder anderen Rauchgasinhaltsstoffen aufweisen.

2. Einrichtung nach Anspruch 1,
dadurch gekennzeichnet,
daß die Beschickung des Einschmelzgefäßes (6) mit Abfallstoffen über einen containerartigen Behälter (8) und über ein geregeltes Schleusensystem (8a) erfolgt.

3. Einrichtung nach Anspruch 1,
dadurch gekennzeichnet,
daß die Teilabschnitte der Regeneratoren (2, 2′) räumlich übereinander angeordnet sind, wobei der Teilabschnitt (3, 3′) unten, der Teilabschnitt (4, 4′) in der Mitte und der Teilabschnitt (5, 5′) oben angeordnet ist.

4. Einrichtung nach Anspruch 1,
dadurch gekennzeichnet,
daß die Teilabschnitte (3, 3′, 4, 4′, 5, 5′) der Regeneratoren (2, 2′) in Einzelapparate aufgeteilt sind.

5. Einrichtung nach Anspruch 1,
dadurch gekennzeichnet,
daß sich an die Regeneratoren (2, 2′) gegebenenfalls an sich bekannte Einrichtungen zur Dampferzeugung, Rauchgasreinigung von Chlor- und Fluorverbindungen, Reststäuben sowie eine Eindampfanlage anschließen.

6. Verfahren zur thermischen Behandlung von Abfallstoffen mit Hilfe einer Einrichtung nach einem der Ansprüche 1 bis 5,
dadurch gekennzeichnet,
daß die Luft in den Regeneratoren (2, 2′) auf eine 5 Temperatur von 800 bis 1200° C vorgewärmt wird.

7. Verfahren nach Anspruch 6,
dadurch gekennzeichnet,
daß die beiden Brennkammern (7, 7′) zur Regelung der Eintrittstemperatur der Luft bzw. des Rauchgases in das Einschmelzgefäß (6) im Bypass zum jeweiligen Regenerator (2, 2′) mit Luft beaufschlagt werden.

8. Verfahren nach Anspruch 6,
dadurch gekennzeichnet,
daß die Eintrittstemperatur des Rauchgases in den jeweiligen Regenerator (2, 2′) über die Luftund/oder Brennstoffeinführung in der jeweiligen Brennkammer (7, 7′) geregelt wird.

## Claims

1. Device for the regenerative waste heat recovery from the flue gases of a furnace by means of two regenerators for preheating the air for combustion and/or purifying the exhaust gas, the device comprising the necessary air and flue gas conveying devices with the blocking and regulating fittings as well as two combustion chambers in which fuel and preheated air are delivered and burnt and of which the flue gases are delivered to a common combustion chamber, and which combustion chambers are disposed in each case between a regenerator and the combustion chamber, and wherein the regenerators comprise a partial section for the storage of the flue gas heat and/or for preheating the air and a second partial section with filtering substances for the catalytic removal of $NO_x$ or other flue gas components,
characterised in that:
   a) the common combustion chamber is in the form of a melting vessel (6) with controlled delivery for waste substances and a removal device (11) for the slag formed therein; and
   b) the regenerators (2, 2′) comprise
      – a first partial section (3, 3′) which is in the form of a checker chamber;
      – a second partial section (4, 4′) which is in the form of an adsorber for the impurities present in the flue gas, with replaceable adsorption agents; and
      – a third partial section (5, 5′) having filter substances for the catalytic removal of $NO_x$ or other flue gas components.

2. Device according to Claim 1,
characterised in that
the melting vessel (6) is charged with waste substances by means of a container-like receptacle (8) and via a controlled lock system (8a).

3. Device according to Claim 1,
characterised in that
the partial sections of the regenerators (2, 2′) are disposed spatially above one another, the partial section (3, 3′) being disposed at the bottom, the partial section (4, 4′) being disposed in the centre and the partial section (5, 5′) being disposed at the top.

4. Device according to Claim 1,
characterised in that
the partial sections (3, 3′, 4, 4′, 5, 5′) of the regenerators (2, 2′) are divided into individual apparatus.

5. Device according to Claim 1,
characterised in that
devices known per se for generating heat, purifying the flue gas of chlorine and fluorine compounds, residual dust as well as an evaporation device are attached to the regenerators (2, 2′).

6. Process for the heat treatment of waste substances using a device according to any one of Claims 1 to 5, characterised in that the air in the regenerators (2, 2′) is preheated to a temperature of 800 to 1200°C.

7. Process according to Claim 6,
characterised in that
the two combustion chambers (7, 7′) are acted upon by air in order to control the inlet temperature of the air or of the flue gas in the melting vessel (6) in the bypass relative to the respective generator (2, 2′).

8. Process according to Claim 6,
characterised in that
the inlet temperature of the flue gas in the respective regenerator (2, 2′) is controlled by introducing air and/or fuel in the respective combustion chamber (7, 7′).

**Revendications**

1. Dispositif pour la récupération thermique régénérative à partir de gaz de combustion d'un foyer à l'aide de deux régénérateurs pour le préchauffage de l'air de combustion ou bien l'épuration des effluents gazeux, ce dispositif comportant les moyens nécessaires pour la circulation de l'air et des gaz de combustion avec l'appareillage de sectionnement et de réglage, ainsi que deux chambres de combustion dans lesquelles sont amenés, pour la combustion, du combustible et de l'air préchauffés, et dont les gaz de combustion sont amenés à un laboratoire commun, ces chambres de combustion étant respectivement disposées entre un régénérateur et le laboratoire, cependant que les régénérateurs comportent une première partie pour l'accumulation de la chaleur des gaz de combustion ou bien pour le préchauffage de l'air et une seconde partie avec des masses de filtration pour l'élimination catalytique de $NO_x$ ou d'autres substances contenues dans les gaz de combustion, dispositif
caractérisé en ce que :
a) l'ensemble du laboratoire revêt la forme d'un récipient de fusion (6) avec une arrivée réglée pour les déchets et avec une évacuation (11) pour les scories formées dans ce récipient,
b) les régénérateurs (2, 2′) comportent :
– une première partie (3, 3′) qui est réalisée sous la forme d'une chambre à grille,
– une deuxième partie (4, 4′) qui est réalisée sous la forme d'adsorbeur des impuretés contenues dans les gaz de combustion avec des moyens d'adsorption susceptibles d'être remplacés,
– une troisième partie (5, 5′) avec des masses de filtration pour l'élimination catalytique de $NO_x$ ou d'autres substances nuisibles ou d'autres substances contenues dans les gaz de combustion

2. Dispositif selon la revendication 1,
caractérisé en ce que
l'alimentation du récipient de fusion (6) avec des déchets, s'effectue par l'intermédiaire d'un récipient du genre container (8) et par l'intermédiaire d'un système d'éclusage réglé (8a).

3. Dispositif selon la revendication 1,
caractérisé en ce que
les différentes parties des régénérateurs (2, 2′) sont disposées les unes au-dessus des autres, la partie (3, 3′) étant disposée dans le bas, la partie (4, 4′) étant disposée dans le milieu et la partie (5, 5′) étant disposée dans le haut.

4. Dispositif selon la revendication 1,
caractérisé en ce que
les différentes parties (3, 3′, 4, 4′, 5, 5′) des régénérateurs (2, 2′) sont réparties en appareils individuels.

5. Dispositif selon la revendication 1,
caractérisé en ce qu'aux
régénérateurs (2, 2′) se raccordent éventuellement, des dispositifs en soi connu pour la production de vapeur, l'élimination des gaz de combustion des composés chlorés fluorés et des poussières résiduelles, ainsi qu'une installation de concentration par évaporation.

6. Procédé pour le traitement thermique de déchets à l'aide d'un dispositif selon une des revendications 1 à 5,
caractérisé en ce que
l'air est préchauffé dans les régénérateurs (2, 2′) à une température comprise entre 800 et 1200°C.

7. Procédé selon la revendication 6,
caractérisé en ce que
les deux chambres de combustion (7, 7′) sont alimentées avec de l'air dans la dérivation vers chaque régénérateur (2, 2′) pour permettre la régulation de la température d'entrée de l'air ou bien des gaz de combustion dans le récipient de fusion (6).

8. Procédé selon la revendication 6,

caractérisé en ce que
la température d'entrée des gaz de combustion dans chaque régénérateur (2, 2') est réglée par l'intermédiaire d'introduction d'air et/ou de combustible dans la chambre de combustion correspondante (7, 7').

Fig. 1

Fig. 2